# EUROPÄISCHE PATENTSCHRIFT

(11) **EP 2 855 981 B1**
(45) Veröffentlichungstag und Bekanntmachung des Hinweises auf die Patenterteilung: **15.05.2019**
(21) Anmeldenummer: 13726094.9
(22) Anmeldetag: 25.04.2013
(51) Int. Cl.: F16J 9/26, B23P 15/06, F16J 9/20

(54) **VERFAHREN ZUR HERSTELLUNG EINES ÖLABSTREIFKOLBENRINGS**
METHOD FOR PRODUCING AN OIL CONTROL PISTON RING
PROCÉDÉ DE PRODUCTION D'UN SEGMENT DE PISTON RACLEUR D'HUILE

(30) Priorität: 31.05.2012 DE 102012010756
(43) Veröffentlichungstag der Anmeldung: 08.04.2015
(73) Patentinhaber: Federal-Mogul Burscheid GmbH, 51399 Burscheid (DE)
(72) Erfinder: MEYER, Klaus, 42929 Wermelskirchen (DE); BÄRENREUTER, Dirk, 51519 Odenthal (DE)
(74) Vertreter: Döpp, Ludger
(86) Internationale Anmeldenummer: PCT/DE2013/000226
(87) Internationale Veröffentlichungsnummer: WO 2013/178204

(56) Entgegenhaltungen:
- WO-A1-2011/132679
- WO-A1-2012/045293
- DE-A1-102006 030 881
- DE-A1-102010 050 598
- GB-A- 2 309 764
- US-A- 3 053 545
- US-A- 4 247 972

## Beschreibung

Die Erfindung betrifft einen Ölabstreifkolbenring gemäß gattungsbildendem Teil des ersten Patentanspruchs.

In bestimmten Motorprojekten wird immer wieder ein sehr hoher Laufflächenverschleiß an den Laufstegen von Ölabstreifkolbenringen festgestellt. Es hat sich herausgestellt, dass selbst bei extrem verschleißfesten Laufstegbeschichtungen hohe Verschleißraten auftreten, die letztendlich nur durch vergleichsweise hohe Schichtdicken zu kompensieren sind. Dennoch muss der Ring über seine gesamte Lebensdauer die Anforderungen hinsichtlich Ölverbrauch und Reibleistung erfüllen.

Der EP 1 409 896 B1 ist ein Verfahren zur Herstellung eines Ölabstreifkolbenrings zu entnehmen, der mit einem einen verschleißfesten Überzug aufweisenden Laufsteg versehen ist, indem vor dem Aufbringen des verschleißfesten Überzugs laufstegseitig ein Profil erzeugt wird, das im, den die äußere Umfangsfläche und zugleich Lauffläche des Laufstegs bildenden konischen Bereich, eine aus dieser konischen Ringebene radial nach außen hervorstehende radialen Erhebung aufweist, wobei zumindest dieses Profil mit dem verschleißfesten Überzug versehen wird, und wobei zur Einstellung eines über den Ringumfang im Wesentlichen gleichmäßigen Laufflächenprofils zumindest im Bereich der radialen Erhebung ein vorgebbarer Materialabtrag des Überzugs vorgenommen wird.

Die WO 2008/151589 A1 offenbart einen Ölabstreifkolbenring, beinhaltend einen Grundkörper mit einer radial äußeren Lauffläche, einer inneren Umfangsfläche sowie einer oberen und einer unteren Flanke, der mindestens zwei, bedarfsweise mit einer verschleißfesten Schicht versehene Laufflächenstege aufweist, die sich radial in Richtung ihres einer Gegenlauffläche zugewandten Endes, vom Grundkörper ausgehend, unter einen vorgebbaren Winkel, Schenkel bildend, konisch verjüngen und das freie Ende der Laufflächenstege, ausgehend von einem ölraumseitigen Bereich in Richtung eines brennraumseitigen Bereichs abgeschrägt ausgebildet ist, wobei die jeweiligen Übergangsbereiche einerseits vom abgeschrägten Bereich des Laufflächenstegs in die Schenkel und andererseits von den Schenkeln in den Grundkörper, gerundet ausgebildet, d.h. mit definierten Radien versehen, sind.

Die Laufflächenkontur stellt sich bei dieser Ausgestaltungsform als Radius dar. Dementsprechend nimmt die Tragspiegelbreite der Laufstege mit steigendem Verschleiß schnell zu, was nach bestimmter Laufzeit in erhöhtem Ölverbrauch resultiert.

Durch die DE 10 2010 050 598 A1 ist ein Verfahren zur Herstellung eines Kolbenrings bekannt geworden, indem ein, insbesondere aus Gusseisen bestehender, Grundkörper durch mechanische Bearbeitung mit mindestens einem, einen Laufflächenbereich bildenden, Steg versehen wird, die Lauffläche des jeweiligen Stegs einem Poliervorgang unterzogen wird und anschließend auf die polierte Lauffläche sowie zumindest die peripheren Randbereiche des Stegs mindestens eine PVD-Schicht aufgebracht wird. Das jeweilige Profil des mindestens einen Stegs wird vollständig mechanisch, insbesondere durch eine Außendrehbearbeitung vorgearbeitet, ehe die jeweilige Lauffläche dem Poliervorgang unterzogen wird.

Die GB 2309764 A offenbart einen Kolbenring, der - sofern als Ölabstreifkolbenring ausgebildet - mit zwei Laufflächenstegen versehen ist. Zwischen den Laufstegen erstreckt sich eine Nut, wobei im Nutgrund Drainagebohrungen eingebracht sind. Die die Laufflächen bildenden Laufflächenstege sind mit einem CrN-Film oder einem Gemisch aus Cr₂N und Cr versehen, wobei die jeweilige Schicht durch das PVD-Verfahren auf die Laufflächenbereiche aufgebracht wird.

Durch die WO 2011/132679 A1 ist ein Ölabstreifkolbenring bekannt geworden, beinhaltend einen Grundkörper mit einer radial äußeren, durch zwei axial beabstandete, bedarfsweise mit einer Beschichtung versehenen Laufflächenstege bildenden Lauffläche, einer inneren Umfangsfläche sowie zwei radial zwischen den äußeren Bereichen der Laufflächenstege und der inneren Umfangsfläche verlaufenden oberen und unteren Flankenbereichen, wobei zwischen den Laufflächenstegen eine Nut vorgebbarer Breite und Tiefe vorgesehen ist, wobei die Laufstegflanken ausgehend vom Grund der Nut im Wesentlichen parallel zu den oberen und unteren Flankenbereichen verlaufen.

In der DE 10 2006 030 881 A1 wird ein gattungsgemäßer Ölabstreifring beschrieben. Der zweiteilige Ölabstreifring beinhaltet einen Grundkörper, der mit mindestens einem Laufflächensteg versehen ist sowie ein radial hinter dem Grundkörper angeordnetes Federelement, wobei der, ggf. mit einer verschleißfesten Schutzschicht versehene Lauflächensteg eine derartige symmetrisch ballige Oberflächenverrundung aufweist, dass, von beiden Kanten des Laufflächensteges ausgehend, die Oberflächenverrundung mit einem ersten Radius beginnt und dieser erste Radius zum axialen Zentrum des Laufflächensteges hin in mindestens einen zweiten größeren Radius übergeht.

Der Erfindung liegt die Aufgabe zugrunde, ein neuartiges Kolbenringdesign bereit zu stellen, mit welchem, über die gesamte Standzeit des Kolbenrings gesehen, die Anforderungen hinsichtlich Ölverbrauch und Reibleistung optimiert werden können.

Diese Aufgabe wird bei einem Ölabstreifring dadurch gelöst, dass die parallelen Laufstegflanken unter Bildung eines Radius in den Nutgrund der Nut einlaufen, dass der Übergang der parallelen Laufstegflanken in den jeweiligen Abschnitt über einen gekrümmten Bereich, insbesondere durch einen Radius, erfolgt und die axiale Bauhöhe des Grundkörpers ≤ 2,5 mm, insbesondere ≤ 2 mm, beträgt.

Vorteilhafte Weiterbildungen des Anmeldungsgegenstandes sind den zugehörigen gegenständlichen Unteransprüchen zu entnehmen.

Laufflächensteges über einen gekrümmten Bereich, insbesondere einen Radius, erfolgen.

Von Vorteil ist, wenn der Abschnitt unter einem Winkel zwischen 20 und 40° zu den parallel zueinander verlaufenden Laufstegflanken verläuft.

Ähnlich wie beim Stand der Technik, können die Laufflächenstege bedarfsweise mit einem vorgebbaren Außenprofil, insbesondere einem Höckerprofil, versehen werden, auf welchem eine verschleißfeste Beschichtung vorgebbarer Schichtdicke aufgebracht ist. Hierbei kann ein größerer Laufkantenradius sowie ein flacherer Winkel der Laufstegflanken, abhängig von der jeweiligen Beschichtungsstärke und Beschichtungsart, eingestellt werden. Laufkantenradien können zwischen 0,05 und 0,25 mm, auch hier abhängig von der Beschichtungsstärke und Beschichtungsart, im jeweiligen Laufflächensteg eingebracht werden.

Durch den Erfindungsgegenstand können die Stege, trotz bedarfsweise benötigter erhöhter Schichtdicke, gegebenenfalls so schmal wie beim Stand der Technik ausgeführt werden. Dies erlaubt die Herstellung axial besonders niedriger Ölabstreifkolbenringe.

Die Laufflächenstege werden - wie bereits angesprochen - mit einer harten verschleißfesten Beschichtung versehen, die vorteilhaft als PVD-, DLC- oder TAC-Schicht ausgebildet sind. Die Begriffe PVD, DLC oder TAC stehen hierbei für Physical Vapour Deposition, Diamant Like Carbon sowie Tantal Carbid.

In Abhängigkeit vom Einsatzfall können Schichtdicken zwischen 10 und 50 µm auf den Laufflächenstegen aufgebracht werden.

Mit dem Erfindungsgegenstand wird es möglich, die axiale Bauhöhe des Grundkörpers ≤ 2,5 mm, insbesondere ≤ 2 mm, auszuführen.

Von besonderem Vorteil ist auch, dass durch das vorgeschlagene Nutprofil ein derart breiter Nutgrund gebildet wird, dass auch bei axial niedrig bauendem Grundkörper im Nutgrund Drainagebohrungen mit ausreichenden Durchmessern eingebracht werden können.

Der Erfindungsgegenstand ist anhand eines Ausführungsbeispiels in der Zeichnung dargestellt und wird wie folgt beschrieben. Es zeigen:
- Figur 1: Prinzipskizze eines erfindungsgemäßen Kolbenrings;
- Figur 2: Laufflächengestaltung eines erfindungsgemäßen Kolbenrings.

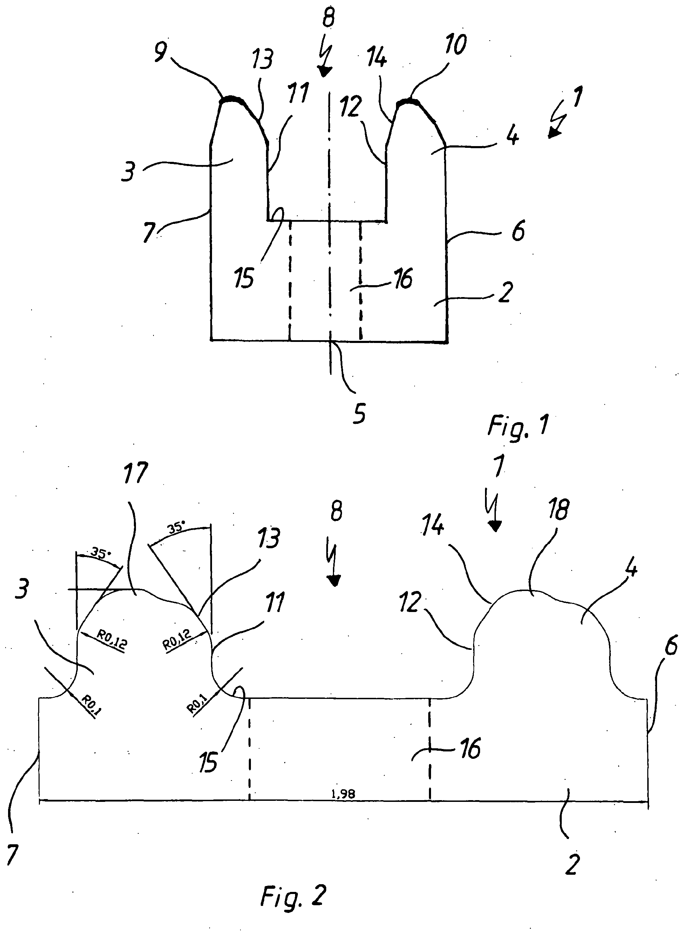

Figur 1 zeigt als Prinzipskizze einen erfindungsgemäßen, als Ölabstreifkolbenring ausgebildeten Kolbenring 1, beinhaltend einen Grundkörper 2, der zwei radial äußere Laufflächenstege 3,4, eine radial innere Umfangsfläche 5, einen oberen Flankenbereich 6 sowie einen unteren Flankenbereich 7 aufweist. Die Laufflächenstege 3,4 sind mit vorgebbarem axialen Abstand zueinander, unter Bildung einer Nut 8, am Grundkörper 2 angeformt. Die Laufflächenstege 3,4 sind in diesem Beispiel im Bereich einer nicht weiter dargestellten, beispielsweise durch eine Zylinderwand gebildeten Gegenlauffläche mit einer Beschichtung 9,10 versehen. Gegenüber dem Stand der Technik verlaufen die Laufstegflanken 11,12 im Wesentlichen parallel zu den Flankenbereichen 6,7. Zwischen den freien Enden der Laufflächenstege 3,4 und dem Endbereich der parallel zueinander verlaufenden Laufstegflanken 11,12 erstreckt sich ein konisch verlaufender Abschnitt 13,14. Im Bereich des durch die erfindungsgemäße Querschnittsform erzeugten Nutprofils ist es möglich, im Bereich des Nutgrundes 15 Drainagebohrungen 16 problemlos einzubringen. Dies wäre schwierig, wenn der Abschnitt 13,14 - wie sonst üblich - unmittelbar konisch in den Nutgrund 15 einlaufen würde.

Figur 2 zeigt als Prinzipskizze eine, sich am Stand der Technik orientierende Laufflächengestaltung eines als Ölabstreifkolbenring ausgebildeten Kolbenrings 1. Gleiche Bauteile sind mit gleichen Bezugszeichen versehen.

Der Grundkörper 2 des Kolbenrings 1 ist mit einer, ähnlich zu Figur 1 ausgestalteten Nut 8 versehen. Auch hier sind, ausgehend vom Nutgrund 15, im Wesentlichen parallel zu den Flankenbereichen 6,7 verlaufende Laufstegflanken 11,12 gegeben, so dass nutgrundseitig eine relativ große Breite gegeben ist, um entsprechend große Drainagebohrungen 16 in den Grundkörper 2 einzubringen. In diesem Beispiel verlaufen die parallel zueinander verlaufenden Laufstegflanken 11, 12 über einen Radius R 0,1 in den Nutgrund 15 ein. In Analogie zu Figur 1 ist auch hier ein die Laufstegbreite reduzierender konisch verlaufender Abschnitt 13,14 vorgesehen, wobei der Übergangsbereich von den parallel zueinander verlaufenden Laufstegflanken 11,12 in die Abschnitte 13,14 ebenfalls über Radien erfolgt. Die Laufflächenstege 3,4 sind in diesem Beispiel mit einem Höckerprofil 17,18 versehen, wobei - hier nicht dargestellt - in Analogie zu Figur 1 eine entsprechende Beschichtung auf dem jeweiligen Laufflächensteg 3,4 aufgebracht werden kann.

## Patentansprüche

1. Ölabstreifkolbenring, beinhaltend einen Grundkörper (2) mit einer radial äußeren, durch zwei axial beabstandete, bedarfsweise mit einer Beschichtung (9,10) versehenen Laufflächenstege (3,4) bildenden, Lauffläche, einer inneren Umfangsfläche (5), sowie zwei radial zwischen den äußeren Bereichen der Laufflächenstege (3,4) und der inneren Umfangsfläche (5) verlaufenden oberen (6) und unteren Flankenbereichen (7), wobei zwischen den Laufflächenstegen (3,4) eine Nut (8) vorgebbarer Breite und Tiefe vorgesehen ist, wobei die Laufstegflanken (11,12), ausgehend vom Nutgrund (15) der Nut (8), im Wesentlichen parallel zu den oberen und unteren Flankenbereichen (6,7) verlaufen, wobei auf vorgebbarer radialer Höhe der Nut (8) ein sich in Richtung des freien Endes der Laufflächenstege (3,4) unter einen vorgebbaren Winkel erstreckender, die Breite der Laufflächenstege (3,4) reduzierender, Abschnitt (13,14) vorgesehen ist, wobei der Abschnitt (13,14) unter einem Winkel zwischen 20 und 40° zu den parallelen Laufstegflanken (11,12) verläuft und dass die Laufflächenstege (3,4) mit einem vorgebbaren Profil, insbesondere einem Höckerprofil (17,18), versehen sind, auf welchem eine verschleißfeste Beschichtung vorgebbarer Schichtdicke aufgebracht ist, **dadurch gekennzeichnet, dass** die parallelen Laufstegflanken (11,12) unter Bildung eines Radius in den Nutgrund (15) der Nut (8) einlaufen, dass der Übergang der parallelen Laufstegflanken (11,12) in den jeweiligen Abschnitt (13,14) über einen gekrümmten Bereich, insbesondere durch einen Radius, erfolgt und die axiale Bauhöhe des Grundkörpers ≤ 2,5 mm, insbesondere ≤ 2 mm, beträgt.

2. Ölabstreifkolbenring nach Anspruch 1, **dadurch gekennzeichnet, dass** die Beschichtung (9,10) als PVD, DLC- oder TaC-Schicht ausgebildet ist.

3. Ölabstreifkolbenring Anspruch 1 oder 2, **dadurch gekennzeichnet, dass** die Beschichtung (9,10) eine Schichtdicke zwischen 10 und 50 µm aufweist.

## Claims

1. An oil scraper piston ring, comprising a base body (2) having a radial outer bearing surface which forms two bearing surface webs (3, 4) which are axially spaced from each other and, if required, provided with a coating (9, 10), an inner circumferential surface (5) as well as two upper (6) and lower flank areas (7) that extend radially between the outer areas of the bearing surface webs (3, 4) and the inner circumferential surface (5), wherein a groove (8) having a pre-determinable width and depth is provided between the bearing surface webs (3, 4), wherein the bearing web flanks (11, 12), starting from the base (15) of the groove, essentially extend parallel to the upper and lower flank areas (6, 7), wherein at a pre-determinable radial height of the groove (8) a section (13, 14) is provided which extends in the direction of the free end of the bearing surface webs (3, 4) at a pre-determinable angle and reduces the width of the bearing surface webs (3, 4), wherein the section (13, 14) extends at an angle comprised between 20 and 40° with respect to the parallel bearing web flanks (11, 12) and that the bearing surface webs (3, 4) are provided with a pre-determinable profile, in particular a cusp profile (17, 18), onto which a wear-resistant coating having a pre-determinable layer thickness has been applied, **characterized in that** the parallel bearing web flanks (11, 12) run into the grove base (15) of the groove (8) while forming a radius, that the transition of the parallel bearing web flanks (11, 12) into the respective section (13, 14) takes place through a curved area, in particular through a radius, and the axial construction height of the base body is ≤ 2.5 mm, in particular ≤ 2 mm.

2. An oil scraper piston ring according to claim 1, **characterized in that** the coating (9, 10) is formed as a PVD, DLC or TaC layer.

3. An oil scraper piston ring according to claim 1 or 2, **characterized in that** the coating (9, 10) comprises layer thickness comprised between 10 and 50 µm.

## Revendications

1. Segment de piston racleur d'huile comprenant un corps de base (2) ayant une surface de roulement radialement extérieure, qui forme deux entretoises de surface de roulement (3, 4) axialement espacées l'une de l'autre et en cas de besoin munies d'un revêtement (9, 10), une surface circonférentielle intérieure (5) ainsi que deux parties de flanc supérieure (6) et inférieure (7), qui s'étendent radialement entre les zones extérieures des entretoises de surface de roulement (3, 4) et la surface circonférentielle intérieure (5), dans lequel une rainure (8) ayant une largeur et une profondeur pré-déterminables est prévue entre les entretoises de surface de roulement (3, 4), les flancs d'entretoise de roulement (11, 12) s'étendant à partir du fond de rainure (15) de la rainure (8) essentiellement de manière parallèle par rapport aux parties de flanc supérieure et inférieure (6, 7), dans lequel à une hauteur radiale pré-déterminable de la rainure (8) une section (13, 14) est prévue, qui s'étend dans la direction de l'extrémité libre des entretoises de surface de roulement (3, 4) avec un angle pré-déterminable et qui réduit la largeur des entretoises de surface de roulement (3, 4), la section (13, 14) s'étendant avec un angle compris entre 20 et 40° par rapport aux flancs d'entretoise de roulement (11, 12), et les entretoises de surface de roulement (3, 4) étant munies d'un profilé pré-déterminable, notamment d'un profilé de bosses (17, 18), sur lequel est appliqué un revêtement résistant à l'usure et ayant une épaisseur de couche pré-déterminable, **caractérisé en ce que** les flancs d'entretoise de roulement (11, 12) parallèles entrent dans le fond de rainure (15) de la rainure (8) en formant un rayon, que la transition des flancs d'entretoise de roulement (11, 12) parallèles à la section respective (13, 14) se fait par une zone courbée, notamment par un rayon et la hauteur de construction axiale du corps de base est ≤ 2,5 mm, notamment ≤ 2 mm.

2. Segment de piston racleur d'huile selon la revendication 1, **caractérisé en ce que** le revêtement (9, 10) est formé comme une couche PVD, DLC ou TaC.

3. Segment de piston racleur d'huile selon la revendication 1 ou la revendication 2, **caractérisé en ce que** le revêtement (9, 10) comprend une épaisseur de couche comprise entre 10 et 50 µm.
